Europäisches Patentamt

European Patent Office

Office européen des brevets

(19)

(11) **EP 0 463 537 B1**

(12) **EUROPÄISCHE PATENTSCHRIFT**

(45) Veröffentlichungstag und Bekanntmachung des Hinweises auf die Patenterteilung:
**16.07.1997   Patentblatt 1997/29**

(51) Int Cl.$^6$: **G01M 15/00**, F02D 41/14, F02D 31/00

(21) Anmeldenummer: **91109920.8**

(22) Anmeldetag: **18.06.1991**

(54) **Verfahren zur prüfstandslosen Ermittlung technischer Kennwerte von Verbrennungsmotoren und deren Einzelzylindern und Vorrichtung zum Durchführen dieses Verfahrens**

Method for off-bench determining of technical characteristics of combustion engines and their single cylinders, and apparatus making use of this method

Procédé de mesure hors banc de caractéristiques de moteurs à combustion et de chacun de leur cylindres, et dispositif mettant en oeuvre ce procédé

(84) Benannte Vertragsstaaten:
**DE FR GB**

(30) Priorität: **29.06.1990  DE 4020637
19.12.1990  DE 4040648**

(43) Veröffentlichungstag der Anmeldung:
**02.01.1992   Patentblatt 1992/01**

(73) Patentinhaber: **Nobis, Günter, Dr.-Ing.
D-73240 Wendlingen (DE)**

(72) Erfinder: **Nobis, Günter, Dr.-Ing.
D-73240 Wendlingen (DE)**

(56) Entgegenhaltungen:
**DD-A- 244 638          DE-A- 3 401 020**

**Beschreibung**

Die Erfindung betrifft ein Verfahren zur prüfstandslosen Ermittlung technischer Kennwerte von Verbrennungsmotoren und deren Einzelzylindern gemäß dem Oberbegriff des Anspruches 1 sowie eine Vorrichtung zur Durchführung des Verfahrens.

Sie ermöglicht es einerseits den Motorenherstellern, mit minimalem Aufwand die Qualität von Verbrennungsmotoren im Herstellungsprozeß in wichtigen Parametern sowohl im geschleppten als auch im gefeuerten Betrieb zu prüfen und andererseits im Servicebereich und im Rahmen der technischen Überwachung den technischen Zustand von in Nutzung befindlichen Motoren auf einfache und schnelle Weise zu prüfen. Das Verfahren ermöglicht sowohl die umfassende Ermittlung von Kennwerten für den Gesamtmotor als auch von Kennwerten für die einzelnen Zylinder und den Drehzahlregler durch Analyse sekundenschneller Prüfläufe des betriebswarmen Motors. Die Lokalisierung von Fehlerursachen in der Motormechanik, der Kraftstoffzumessung und der Drehzahlregelung wird damit sehr wesentlich unterstützt.

Es sind bereits Verfahren bekannt. bei denen das Drehmoment und die Nennleistung eines Verbrennungsmotors indirekt aus der zeitlichen Veränderung kontinuierlich ermittelter Umlaufzeiten, Teilumlaufzeiten oder Winkelgeschwindigkeiten der Kurbelwelle bestimmt werden (DE 34 01 020 A1 und DD 2 44 638 A1).

Charakteristisch für beide Verfahren ist die kontinuierliche Erfassung von Umlaufzeiten. Teilumlaufzeiten oder Winkelgeschwindigkeiten innerhalb gleichgroßer, unmittelbar aufeinanderfolgender Kurbelwinkelintervalle.

Die Bestimmung von Einzelzylinderkennwerten ist hier an den Einsatz eines hochauflösenden, präzisen Winkelmarkengebers gebunden.

Die Verfahren gelangen sowohl bei Leerlaufdrehzahl des Motors als auch während der schlagartigen Beschleunigung gegen das Trägheitsmoment der beschleunigten Bauteile bis zu einer maximalen Drehzahl und der sich nach Unterbrechung der Kraftstoffzufuhr anschließenden Auslaufphase zur Anwendung.

Weiter ist ein Verfahren bekannt, bei dem die relative Leistungsverteilung auf die einzelnen Zylinder eines Verbrennungsmotors bestimmt wird (US 4 064 747).

Dieses Verfahren beruht auf der Ermittlung von Teilumlaufzeiten der Kurbelwelle für jeweils ein Winkelsegment eines Motorbauteils, wobei innerhalb des Arbeitstaktes jedes Zylinders zwei Winkel segmente definiert sind, für die Teil umlaufzeiten mittels Zähler erfaßt werden. Die Differenz der Zählerstände innerhalb des Arbeitstaktes stellt ein Maß für die Beschleunigung während des Arbeitstaktes des jeweiligen Zylinders dar. Mit der Bestimmung der Relation dieser zylinderbezogenen Werte zueinander wird zugleich die relative Leistungsverteilung auf die einzelnen Zylinder des Verbrennungsmotors analysiert.

Schließlich ist noch ein Verfahren bekannt, mit dem an fremdangetriebenen 4-Takt-Verbrennungsmotoren die relative Kompression der Einzelzylinder beurteilt werden kann (DE 33 16484C2).

Mit einer geeigneten Vorrichtung wird zum einen für jeden Zahn des Anlasserzahnrades die Winkelgeschwindigkeit erfaßt. Zum anderen werden für jeden Zylinder zwei Zeitfenster vorgegeben: in dem einen weist die Winkelgeschwindigkeit eine fallende und in dem anderen eine steigende Tendenz auf. Während der Prüfung werden in dem ersten Fenster die abfallenden und in dem zweiten Fenster die ansteigenden Momentanwerte der Winkelgeschwindigkeit aufsummiert. Der Mittelwert aus beiden Werten stellt im Vergleich zu den Mittelwerten der anderen Zylinder ein Maß für die relative Kompression des jeweiligen Zylinders dar.

Aus diesen Darlegungen geht hervor, daß die bisher bekannten Verfahren entweder

- sehr aufwendig und damit für die Werkstatt oder für den Einsatz im Kraftfahrzeug nicht geeignet sind,
- eine Datenanalyse zur Ermittlung der technischen Kennwerte des Motors und der Einzelzylinder erst nach Abschluß der Datenerfassung zulassen.
- keine einheitliche Lösung für den Gesamtmotor und für die Einzelzylinder bieten,
- keinen exakten Winkelbezug zu den während des Arbeitszyklus ablaufenden Prozesse herstellen oder
- aufgrund von Vereinfachungen zu ungenau sind.

Aufgabe der Erfindung ist es, die gattungsgemäßen Verfahren so weiterzuentwickeln, daß zum einen in einer weiterhin kurzen Prüfzeit eine noch umfassendere Motordiagnose durch Bestimmen einer wesentlich größeren Anzahl technischer Kennwerte sowohl für den Gesamtmotor als auch für die Einzelzylinder und zusätzlich für den Drehzahlregler ermöglicht wird, trotz wesentlicher Vereinfachung des Verfahrens und daß zum anderen die Möglichkeit geschaffen wird, die drehmoment- bzw. leistungsproportionale Winkelbeschleunigung der Einzelzylinder und des Gesamtmotors während des Motorlaufes echtzeitmäBig zu erfassen.

Diese Aufgabe wird erfindungsgemäß mit den kennzeichnenden Merkmalen des Anspruchs 1 gelöst. Eine Vorrichtung zur Durchführung des Verfahrens zeichnet sich durch die Merkmale des Anspruchs 10 aus.

Erfindungswesentlich an dem beanspruchten Verfahren ist zum einen, daß aus einer Folge von in festgelegten Kurbelwinkelbereichen ermittelten Umlauf- oder Teilumlaufzeiten der Kurbelwelle, die sich in der Periodizität des Arbeitszyklus des Motors wiederholt, der Drehzahlverlauf als Funktion des Kurbelwinkels sowie der Verlauf von dynamischem Drehmoment und dynamisch ermittelter effektiver Leistung des Motors als Funktion der Drehzahl dargestellt und Kennzahlen für das maximale Drehmoment, die Nennleistung und den mechanischen Wirkungsgrad des Motors sowie für die Funktion des Drehzahlreglers ermittelt werden. Zum anderen wird aus einer Folge von in definierten Kurbelwinkelbereichen ermittelten Teilumlaufzeiten, die sich in der Periodizität des Arbeitszyklus des Motors wiederholt, die Veränderung der Momentanwinkelgeschwindigkeit innerhalb charakteristischer Phasen des Arbeitsprozesses als Funktion des Kurbelwinkels bestimmt. Daraus werden relative Kennzahlen für den Vergleich der Funktion der Einzelzylinder bestimmt, die primär die Einzelzylinderleistung, den Wirkungsgrad des Einzelzylinders sowie die Zylinderdichtheit und die Kompression des Einzelzylinders umfassen.

Weiterhin werden die für die Ermittlung von Teilumlaufzeiten definierten Kurbelwinkelbereiche erfindungsgemäß aus einer gleichmäßigen Winkelteilung eines fest auf der Kurbelwelle montierten oder von ihr angetriebenen Bauteiles gewonnen, wobei durch Zusammenfassen mehrerer Winkelsegmente zu einem Kurbelwinkelbereich der negativen Wirkung von Teilungsfehlern auf die Genauigkeit der Ergebnisse wirkungsvoll begegnet wird.

Die Vorteile dieses Verfahrens bestehen zum einen in der Möglichkeit, die Winkelteilung eines ohnehin am Motor vorhandenen Bauteiles, wie zum Beispiel des Anlasserzahnkranzes, zu benutzen, obwohl bestimmte Teilungsfehler vorhanden sind. Der Aufwand zur Durchführung des Verfahrens ist damit vergleichsweise sehr gering. Zum anderen wird der erforderliche Speicherplatz zum Abspeichern eines kompletten Ablaufes der Volllastbeschleunigung mit anschließender Auslaufphase und damit gleichzeitig die Zeit für die Datenanalyse minimiert. Weiterhin ist hervorzuheben, daß durch den konsequenten Bezug der Umlauf- und Teilumlaufzeiten auf den Arbeitszyklus und vorbestimmte Kurbelwinkelbereiche die Voraussetzung für eine einfache programmtechnische Auswertung und Berechnung der Kennwerte gegeben ist.

Zusätzlich ermöglicht das beanspruchte Verfahren eine unterbrochene Erfassung von Umlauf- oder Teilumlaufzeiten. wodurch parallel zur Zeiterfassung, in den dazwischenliegenden Zeiträumen (Kurbelwinkelbereiche ohne Zeiterfassung), entweder zusätzliche Meßgrößen erfaßt oder Drehzahl. Drehmoment. Arbeit. Leistung sowie andere technische Kennwerte in Echtzeit berechnet werden können.

Nachfolgende Ausführungen sollen das Verständnis der Erfindung und der verwendeten formelmäßigen Beziehungen erleichtern. Ganz allgemein beruht die Erfindung auf den an sich bekannten Tatsachen, daß zum einen die Drehbewegung der Kurbelwelle aufgrund der zyklischen Arbeitsweise von Kolbenmaschinen unter der Wirkung von Gas- und Massenkräften ungleichförmig verläuft und diese Prozesse sich periodisch mit dem Arbeitszyklus wiederholen, und daß zum anderen die Winkelbeschleunigung proportional zur Änderung der Winkelgeschwindigkeit innerhalb eines bestimmten Drehwinkels. zur dabei verrichteten Arbeit und zur dabei eingetretenen Änderung der kinetischen Energie ist.

Grundsätzlich gelten die allgemeinen Beziehungen

$$\mathbf{M} = \Theta * \ddot{\varphi} \qquad\qquad (1)$$

$$\mathbf{W} = \Theta * \ddot{\varphi} * \varphi \qquad\qquad (2)$$

$$\mathbf{P} = \Theta * \ddot{\varphi} * \dot{\varphi} \qquad\qquad (3)$$

Dabei bedeuten

M   Drehmoment
W   Arbeit
P   Leistung
e   Trägheitsmoment der beschleunigten Massen
$\varphi$   Drehwinkel
$\dot{\varphi}$   Winkelgeschwindigkeit
$\ddot{\varphi}$   Winkelbeschleunigung

Unter der Voraussetzung. daß das Trägheitsmoment integriert über eine Kurbelwellenumdrehung konstant ist, und daß bei vergleichender Betrachtung gleichartigen Kurbelwinkelbereiche sowohl der Drehwinkel als auch das Trägheitsmoment konstant sind. können aus der kinematischen Analyse heraus proportionale Kenngrößen für Drehmoment. Arbeit und Leistung gewonnen werden.

Allgemein gelten:

$$M \sim \ddot{\varphi} \tag{4}$$

$$W \sim \ddot{\varphi} \tag{5}$$

$$P \sim \ddot{\varphi} * \dot{\varphi} \tag{6}$$

Dafür gelten unter Beachtung einer begrenzten Winkelauflösung folgende Beziehungen :

$$\Delta\varphi_m = \frac{2\pi * x_m}{x_0} \tag{7}$$

mit

$x_0$    Anzahl der Winkelsegmente der Kurbelwinkelteilung

$x_m$    Anzahl der betrachteten Winkelsegmente

$$\dot{\varphi} = \frac{\Delta\varphi_m}{\Delta t} \tag{8}$$

mit

$\Delta\varphi_m$  Kurbelwinkelbereich, in dem die Zeitmessung erfolgt

$\Delta t$    gemessene Zeit

$$\Delta t = \frac{z}{f} \tag{9}$$

mit

$z$    Zählerstand des Zeittaktzählers

$f$    Frequenz des Zeittaktes

$$\ddot{\varphi} = \frac{\Delta\dot{\varphi}}{\Delta\varphi_a} * \overline{\dot{\varphi}} \tag{10}$$

mit

$\Delta\varphi_a$   Kurbelwinkelbereich, in dem die Winkelgeschwindigkeitsänderung analysiert wird

$\Delta\varphi$    Winkelgeschwindigkeitsänderung im Winkelbereich $\Delta\varphi_a$

$\bar{\varphi}$    mittlere Winkelgeschwindigkeit im Winkelbereich $\Delta\varphi_a$

$$\Delta\varphi_a = \frac{2\pi}{x_0} * \left(x_{i+p} - x_i\right) \quad (11)$$

mit

$x_i$    Anzahl der Winkelsegmente bis zum Start der i-ten Zeitmessung

$x_{i+p}$    Anzahl der Winkelsegmente bis zum Start der (i+p)-ten Zeitmessung

woraus Gleichung (12) folgt :

$$\ddot{\varphi}_i = \frac{x_m^2 * \pi}{\left(x_{i+p} - x_i\right) * x_0} * \left(\frac{f^2}{z_{i+p}^2} - \frac{f^2}{z_i^2}\right) \quad (12)$$

Diese Gleichung gilt allgemein, unabhängig davon, ob der Gesamtmotor bzw. ein vollständiger Arbeitszyklus oder die Einzelzylinder bzw. einzelne Kurbelwinkelbereiche betrachtet werden.

Bei der praktischen Durchführung des Verfahrens ist es zweckmäßig, den betriebswarmen Motor in unterschiedlichen Betriebsarten zu prüfen, wie es in Anspruch 5 dargelegt ist. Je nach Betriebsart erhält man unterschiedliche Kennwerte für den Motor, seine Einzelzylinder und auch für den Drehzahlregler.

Wie durch Anwendung des Verfahrens die Kennwerte maximales Drehmoment, Nennleistung und mechanischer Wirkungsgrad des Verbrennungsmotors sowie der Verlauf des dynamischen Drehmomentes und der dynamisch ermittelten effektiven Leistung des Motors als Funktion der Drehzahl ermittelt werden, ist in den Ansprüchen 7 und 8 ausführlich geschildert. Das gleiche trifft auf die Ermittlung der Kennwerte für den Drehzahlregler gemäß Anspruch 9 zu.

Voraussetzung für die Bestimmung von Kennwerten für die Einzelzylinder eines Motors ist die Festlegung von Anzahl und Anordnung der Kurbelwinkelabschnitte innerhalb eines Arbeitszyklus, in denen Teilumlaufzeiten zu ermitteln sind. Hierbei ist die Kenntnis des Verlaufes der resultierenden Tangentialkraft von Vorteil, weil sie proportional zu der für die Kennwertbestimmung erforderlichen Winkelbeschleunigung ist, wie Gleichung (15) zeigt. Es gelten folgende Beziehungen:

$$M = F_{t_{res}} * r \quad (13) \qquad \text{mit } F_{t_{res}} \quad \text{resultierende Tangen-tialkraft}$$

$$\theta * \ddot{\varphi} = F_{t_{res}} * r \quad (14) \qquad\qquad r \qquad \text{Kurbelradius}$$

$$\ddot{\varphi} \sim F_{t_{res}} \quad (15)$$

Durch Analyse der Winkelbeschleunigung in ausgewählten Kurbelwinkelbereichen, in denen die Gaskräfte einen dominierenden Einfluß auf die Änderung der kinetischen Energie der Kurbelwelle ausüben, erhält man Kennwerte, die bestimmten Merkmalen der Einzelzylinder proportional sind. Die Winkel beschleunigung wird hierbei gemäß Gleichung (9) und (11) aus jeweils zwei Teilumlaufzeiten am Anfang und am Ende jedes Kurbelwinkelbereiches ermittelt.

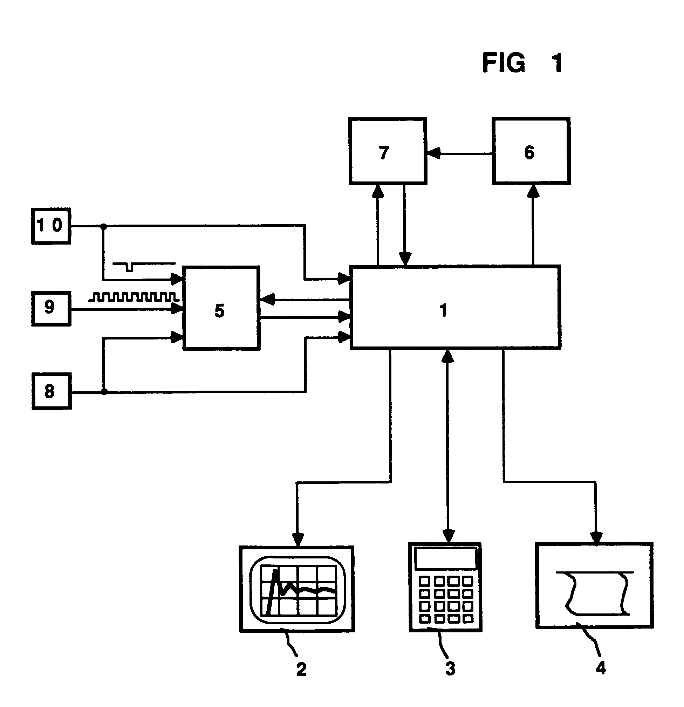

Nachfolgende Auflistung stellt die Zusammenhänge der Einfachheit halber nur für den ersten Zylinder, der unmittelbar auf den Bezugswinkel folgt, und nur für einen Arbeitszyklus dar. Zur Verdeutlichung der Verhältnisse wird hierbei auf die in Fig. 1 dargestellten Kurbelwinkelbereiche Bezug genommen.
In der Auflistung werden folgende Abkürzungen verwendet:

i-te TUZ     i-te Teilumlaufzeit deren Erfassung bei $x_i$ gestartet wurde

18. TUZ     TUZ im Kompressionstakt vor dem OT des 1. Zylinders

1. TUZ     TUZ im Bereich des OT des 1. Zylinders

2. TUZ     TUZ im Expansionstakt nach dem OT des 1. Zylinders

3. TUZ     TUZ im Kompressionstakt vor dem OT des 5. Zylinders

$\ddot{\varphi}_{(i,j)B}$     Winkelbeschleunigung des Einzelzylinders im betrachteten Arbeitszyklus mit

    i    Nummer der TUZ am Anfang des betrachteten Kurbelwinkelbereiches, in dem die Winkelbeschleunigung analysiert wird

    j    Nummer der TUZ am Ende des betrachteten Kurbelwinkelbereiches, in dem die Winkelbeschleunigung analysiert wird

    B    Betriebsart entsprechend der Teilüberschrift in der linken Spalte

| auszuwertende Teilumlaufzeiten | $\ddot{\varphi}$ | Merkmal des Einzelzylinders |
|---|---|---|
| <u>im 1. Bereich der Vollastbeschleunigung</u><br>1. TUZ und 2. TUZ | $\ddot{\varphi}_{(1,2)1}$ | Arbeit des Einzelzylinders in der Expansionsphase |
| 18. TUZ und 2. TUZ    oder<br>18. TUZ und 3. TUZ | $\ddot{\varphi}_{(18,2)1}$<br>$\ddot{\varphi}_{(18,3)1}$ | Arbeit des Einzelzylinders in der Kompressions- und Expansionsphase |
| <u>im 5. Bereich - Auslaufphase</u><br>18. TUZ und 1. TUZ | $\ddot{\varphi}_{(18,1)5}$ | Arbeit des Einzelzylinders in der Kompressionsphase |
| 1. TUZ und 2. TUZ | $\ddot{\varphi}_{(1,2)5}$ | Arbeit des Einzelzylinders in der Expansionsphase |
| 18. TUZ und 2. TUZ    oder<br>18. TUZ und 3. TUZ | $\ddot{\varphi}_{(18,2)5}$<br>$\ddot{\varphi}_{(18,3)5}$ | Verlustmoment des Einzelzylinders |

<u>im Leerlauf</u>

| | | |
|---|---|---|
| 18. TUZ und 1. TUZ | $\ddot{\varphi}_{(18,1)\,L}$ | Arbeit des Einzelzylinders in der Kompressionsphase |
| 1. TUZ und 2. TUZ | $\ddot{\varphi}_{(1,2)\,L}$ | Arbeit des Einzelzylinders in der Expansionsphase |
| 18. TUZ und 2. TUZ      oder 18. TUZ und 3. TUZ | $\ddot{\varphi}_{(18,2)\,L}$ $\ddot{\varphi}_{(18,3)\,L}$ | Laufunruhe |

<u>beim Anlaßvorgang</u>

| | | |
|---|---|---|
| 18. TUZ und 1. TUZ | $\ddot{\varphi}_{(18,1)\,A}$ | Arbeit des Einzelzylinders in der Kompressionsphase |
| 1. TUZ und 2. TUZ | $\ddot{\varphi}_{(1,2)\,A}$ | Arbeit des Einzelzylinders in der Expansionsphase |

Darüberhinaus ist es möglich, durch Zusammenfassen dieser ermittelten Winkelbeschleunigungswerte weitere Merkmale zu beschreiben.

Das ist zum einen die Zylinderdichtheit, die aus der Summe der Expansionsarbeit und dem Betrag der Kompressionsarbeit zu bilden ist. Betrachtet man wieder nur den ersten Zylinder und einen Arbeitszyklus, so gilt

für die Analyse in der Auslaufphase:

$$\ddot{\varphi}_{(Z)\,5} = \left| \ddot{\varphi}_{(18,1)\,5} \right| + \ddot{\varphi}_{(1,2)\,5} \qquad (16)$$

und für den Anlaßvorgang gilt:

$$\ddot{\varphi}_{(Z)\,A} = \left| \ddot{\varphi}_{(18,1)\,A} \right| + \ddot{\varphi}_{(1,2)\,A} \qquad (17)$$

Zum anderen betrifft das den mechanischen Wirkungsgrad, der aus der Expansionsarbeit oder aus Expansions- und Kompressionsarbeit unter der Voraussetzung gleicher Drehzahlbereiche bei der Ermittlung in der Beschleunigungs- und Auslaufphase nach folgender Beziehung gebildet wird

$$\eta_m \approx \frac{\overline{\ddot{\varphi}}_{(i,j)\,1}}{\overline{\ddot{\varphi}}_{(i,j)\,1} + \left| \overline{\ddot{\varphi}}_{(i,j)\,5} \right|} \qquad (18)$$

In dieser Gleichung werden zylinderbezogene Mittelwerte verwendet, die über eine bestimmte Anzahl von Arbeitszyklen hinweg gebildet werden.

Für den Vergleich der Einzelzylinder ist es allgemein zweckmäßig, für die vorgenannten Kenngrößen über eine bestimmte Anzahl von Arbeitszyklen zylinderbezogene Mittelwerte und mit diesen Mittelwerten relative Einzelzylinderkennwerte zu bilden.

Somit ergibt sich eine große Breite von Einzelzylinderkennwerten, von denen die

relative Einzelzylinderarbeit (relative Einzelzylinderleistung),

relativer Wirkungsgrad und relative Zylinderdichtheit

für die Praxis besondere Bedeutung besitzen.

Nach diesen Erläuterungen werden zwei Ausführungsbeispiele anhand von Zeichnungen beschrieben. Es zeigen:

Fig. 1    Vorrichtung zum Durchführen des Verfahrens,

Fig. 2    Verlauf der resultierenden Tangentialkraft bzw. der Winkelbeschleunigung eines 6-Zylinder-Dieselmotors als Funktion des Kurbelwinkels bei Vollast,

Fig. 3    Verlauf der Winkelgeschwindigkeit eines 6-Zylinder-Dieselmotors als Funktion des Kurbelwinkels im ersten Bereich der Vollastbeschleunigung,

Fig. 4    Verlauf der Winkelbeschleunigung eines 4-Zylinder-Dieselmotors als Funktion der Motordrehzahl und

Fig. 5    Kurbelwellendrehzahl als Funktion des Kurbelwinkels im Abregelbereich des Drehzahlreglers.

Die für die Ausführungsbeispiele verwendete Vorrichtung ist in Fig. 1 dargestellt und besteht im wesentlichen aus zwei Zählerschaltungen 5 und 7, einem Mikrorechner 1 mit angeschlossenem Monitor 2, Handterminal 3 und Drucker 4, einem Taktgenerator 6 sowie drei Sensoren 8, 9 und 10. Sensor 8 erfaßt eine feste Bezugswinkelmarke auf der Kurbelwelle, die im vorliegenden Fall bei 20° KW vor OT des ersten Zylinders angeordnet ist. Sensor 9 erfaßt die Verzahnung des Anlasserzahnkranzes. Sensor 10 erfaßt auf der Einspritzpumpenwelle eine Markierung des OT desjenigen Zylinders, der im Arbeitszyklus vor dem ersten Zylinder angeordnet ist.

Die Signale dieser Sensoren werden der Zählerschaltung 5 zugeführt, das Arbeitszyklussignal von Sensor 10 und das Signal von der festen Bezugswinkelmarke von Sensor 8 werden zusätzlich dem Mikrorechner 1 zugeführt.

Aus der logischen Abfolge von Arbeitszyklussignal und des Signals der festen Bezugswinkelmarke erfolgt das Rücksetzen und Neustarten des in der Zählerschaltung 5 angeordneten Zählers. Damit ist eine feste Zuordnung zwischen Zählerstand und dem Kurbelwinkel im Arbeitszyklus als Anzahl der Winkelteilungen bzw. Zähne des Anlasserzahnkranzes nach der festen Bezugswinkelmarke im Arbeitszyklus gegeben. Der Mikrorechner 1 kann nun mit den im Programm gespeicherten Werten $X_m$ und $X_i$ die für die Analyse des jeweiligen Motors wichtigen Kurbelwinkelbereiche detektieren und in Abhängigkeit davon die Zählerschaltung 7 starten, stoppen und den der jeweiligen Teilumlaufzeit oder. Umlaufzeit entsprechenden Zählerstand auslesen. Somit werden Teilumlaufzeiten für vorher definierte Kurbelwinkelbereiche ermittelt, deren Reihenfolge eine zylindermäßige Zuordnung zuläßt.

Als zweckmäßig hat sich erwiesen, daß die Frequenz des den Zeittakt erzeugenden Taktgenerators 6 stufenweise verändert werden kann. In Abhängigkeit von der Betriebsart des Motors und der Messung von Teilumlauf- oder Umlaufzeiten wird durch Signale des Mikrorechners die entsprechende Frequenz eingestellt. Die dafür erforderlichen Informationen enthält das Rechnerprogramm.

Aus den vom Mikrorechner 1 ermittelten Teilumlauf- bzw. Umlaufzeiten und den im Programm gespeicherten Berechnungsvorschriften sowie den für den jeweiligen Motor zusätzlich gespeicherten Werten für $X_o$, $\theta$, $K_M$, $K_P$ und $n_{Mmax}$ werden einerseits die Kennwerte für den Gesamtmotor und den Drehzahlregler, die Kennwerte für die Einzelzylinder und andererseits die Verläufe des dynamischen Drehmomentes und der dynamisch ermittelten effektiven Leistung als Funktion der Motordrehzahl sowie der Motordrehzahl als Funktion des Kurbelwinkels bestimmt.

Diese Ergebnisse können über den am Mikrorechner 1 angeschlossenen Monitor 2 oder Drucker 4 ausgegeben werden. Mittels des ebenfalls am Mikrorechner 1 angeschlossenen Handterminals 3 erfolgt die Bedienung der Vorrichtung, wobei die Eingabe von Daten (zum Beispiel Motortyp) und auch die Ausgabe von ermittelten Kennwerten vorgesehen ist.

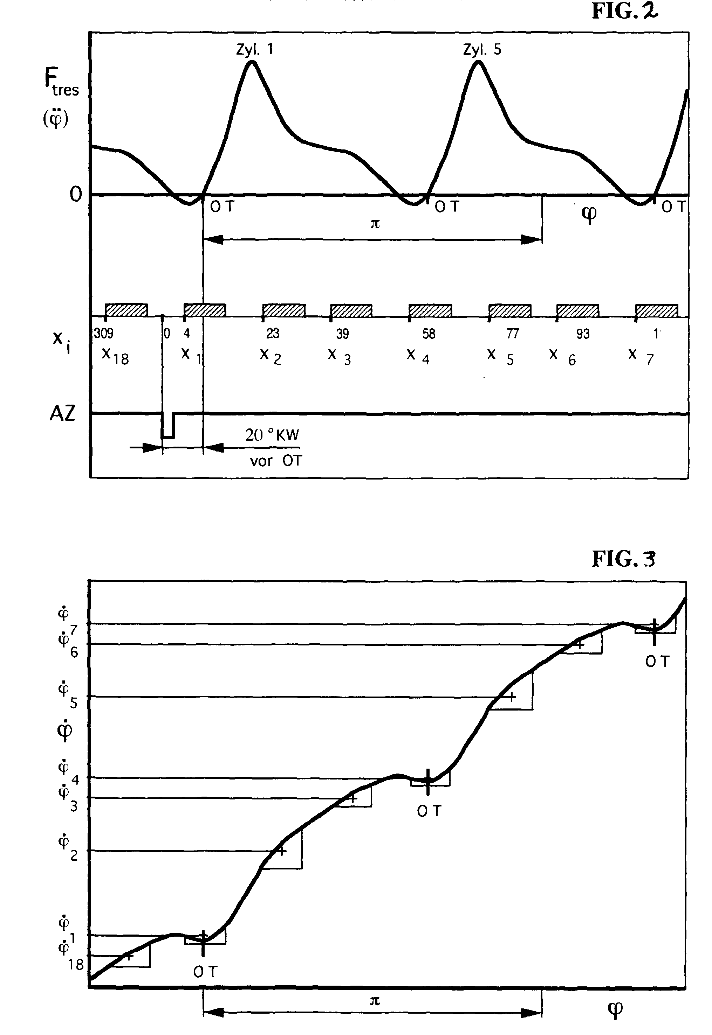

Im ersten Ausführungsbeispiel sollen die Erfassung der Teilumlaufzeiten und Umlaufzeiten für einen 6-Zylinder-Dieselmotor sowie der gesamte Ablauf der Meßwerterfassung dargestellt werden. Als erstes gilt es, die Kurbelwinkelbereiche zu definieren, in denen die Erfassung von jeweils drei Teilumlaufzeiten je Zylinder innerhalb eines Arbeitszyklus erfolgen soll. Ausgehend von einer Zähnezahl des Anlasserzahnkranzes von $X_o = 162$, einer für die Ermittlung der Teilumlaufzeit günstigen Anzahl von Winkelsegmenten bzw. Zähnen von $X_m = 10$ und der festen Bezugswinkelmarke bei 20° KW vor OT des Zylinders 1 wurden die $X_i$-Werte anhand des resultierenden Tangentialkraftverlaufes bei vorgegebener Drehzahl festgelegt. Fig. 2 zeigt einen Ausschnitt dieses Tangentialkraftverlaufes. In den schraffierten Kurbelwinkelbereichen erfolgt die Erfassung der Teilumlaufzeiten. Die entsprechenden Werte für $X_i$ sind für diesen Ausschnitt aus dem Arbeitszyklus mit angegeben, ebenso die feste Bezugswinkelmarke im Arbeitszyklus (AZ).

Fig. 3 zeigt, wie in dieser Weise bei Zylinder 1 und dem nachfolgenden Zylinder 5 im ersten Bereich der Vollastbeschleunigung die Winkelgeschwindigkeit in den festgelegten Kurbelwinkelbereichen zylinderbezogen erfaßt wird. Der im auszuwertenden Kurbelwinkelbereich $(X_{i+p} - X_i)$ ermittelte Anstieg im Winkelgeschwindigkeitsverlauf entspricht der in diesem Bereich wirkenden mittleren Winkelbeschleunigung. Das dabei anzuwendende Verfahren wurde bereits ausführlich beschrieben.

Zur Durchführung des Prüflaufes wird die Vorrichtung mittels der drei genannten Sensoren mit dem im Fahrzeug eingebauten Motor verbunden. Nach Auswahl des Motortyps und der Betriebsart-Vollastbeschleunigung mit anschließender Auslaufphase wird der betriebswarme Motor gestartet und eine festgelegte Leerlaufdrehzahl als Startdrehzahl eingestellt. Läuft der Motor stabil in dieser Drehzahl, wird vom Mikrorechner 1 ein Startsignal ausgegeben, infolgedessen die Vollastbeschleunigung durch schnelles Betätigen des Gaspedals ausgelöst wird. Nach Überschreiten einer festgelegten Winkelgeschwindigkeit oberhalb der Startwinkelgeschwindigkeit und nachfolgendem Rücksetzen der Zählerschaltung 5 beginnt das Erfassen und Abspeichern der Teilumlaufzeiten. Nach Vollendung von vier vollständigen Arbeitszyklen wird die Erfassung der Teilumlaufzeiten beendet und auf die Erfassung von Umlaufzeiten umgeschaltet. Nach Erreichen der Maximaldrehzahl wird der Motor kurze Zeit, zirka eine bis zwei Sekunden, in dieser Drehzahl betrieben und danach durch schnelles Zurücknehmen des Gaspedals die Kraftstoffzufuhr unterbrochen und damit die Auslaufphase eingeleitet. Die Erfassung von Umlaufzeiten wird solange ununterbrochen weitergeführt, bis eine vorher festgelegte Drehzahl unterhalb der Drehzahl bei maximalem Drehmoment $n_{Mmax}$ unterschritten wird. Mit Beginn des auf dieses Ereignis folgenden Arbeitszyklus werden wieder Teilumlaufzeiten erfaßt und nach Unterschreiten einer weiteren Winkelgeschwindigkeitsgrenze wieder auf die Erfassung von Umlaufzeiten umgeschaltet. Die Auslaufphase wird nach dem Zuschalten der Kraftstoffzufuhr durch den Drehzahlregler beendet. Nachdem der Motor zirka fünf bis sieben Sekunden in der Leerlaufdrehzahl gelaufen ist, wird er abgeschaltet. Der Mikrorechner 1 beendet die Erfassung und Abspeicherung der Umlaufzeiten entweder nach Unterschreiten einer Drehzahl unterhalb der Leerlaufdrehzahl oder einer begrenzten Anzahl von Arbeitszyklen in der Leerlaufdrehzahl.

Das Umschalten von der Erfassung der Teilumlaufzeiten auf die Erfassung von Umlaufzeiten und zurück erfolgt automatisch durch den Mikrorechner 1 und anhand der im Programm enthaltenen Umschaltkriterien.

Durch Anwendung der beschriebenen Berechnungsverfahren können mit den gespeicherten Umlauf- und Teilumlaufzeiten die Kennwerte und die Funktionsverläufe für den Prüflauf bestimmt werden. Zur Verbesserung der Reproduzierbarkeit der Prüfergebnisse hat es sich als zweckmäßig erwiesen, den gesamten Prüfablauf drei- bis fünfmal zu wiederholen und die gemittelten Kennwerte und Funktionsverläufe auf dem Monitor 2 darzustellen bzw. auf dem Drukker 4 auszugeben.

Nach einigen nur wenige Sekunden dauernden Prüfläufen steht eine Vielzahl von Kennwerten für eine umfassende Bewertung des technischen Zustandes des Motors, seiner Einzelzylinder und des Drehzahlreglers zur Verfügung. Im einzelnen sind dies:

<u>für den Gesamtmotor:</u>

- maximales Drehmoment
- Nennleistung
- mechanischer Wirkungsgrad
- dynamisches Drehmoment als Funktion der Drehzahl
- dynamisch ermittelte effektive Leistung als Funktion der Drehzahl

<u>für die Einzelzylinder:</u>

- relative Einzelzylinderleistung
- relativer mechanischer Wirkungsgrad
- relative Zylinderdichtheit

<u>für den Drehzahlregler:</u>

- Leerlaufdrehzahl
- maximale Regelabweichung bei Leerlaufdrehzahl
- Abregelbereich
- Maximaldrehzahl
- maximale Regelabweichung bei Maximaldrehzahl
- Drehzahl als Funktion des Kurbelwinkels

Im zweiten Ausführungsbeispiel wird an einem 4-Zylinder-4-Takt-Dieselmotor die Anwendung des Verfahrens ohne Einzel-zylinderanalyse dargestellt, weshalb lediglich Umlaufzeiten der Kurbelwelle zu erfassen sind.

Dem Mikrorechner 1 werden nur die Signale des die feste Kurbelwinkelmarke erfassenden Sensors 8 zugeführt. Mit diesen Signalen steuert der Mikrorechner 1 die Zählerschaltung 7 in der Art, daß die Umlaufzeiten entweder für jede Kurbelwellenumdrehung oder jede zweite ermittelt werden. Bei der Ermittlung der Umlaufzeit nur für jede zweite Umdrehung wird die Zählerschaltung 7 nach dem signalausgelösten Stop, dem Auslesen des Zählerstandes und dem Zurücksetzen nicht sofort wieder gestartet, sondern erst nach Eintreffen des nächsten Kurbelwinkelsignals. In der dazwischenliegenden Zeit besteht die Möglichkeit, zusätzliche Meßgrößen zu erfassen.

In beiden Fällen ist bei der Berechnung der Winkelbeschleunigung gemäß Gleichung (12) zu beachten, daß $X_o = 1$ und $(X_{i+p}-X_i) = 2$ wird. Wird für jede Umdrehung die Umlaufzeit ermittelt, so gilt $p = 2$; falls nur für jede zweite Umdrehung, so gilt $p = 1$.

Zur Durchführung des Prüflaufes wird die Vorrichtung nur mit einem Sensor an den im Fahrzeug eingebauten Motor angeschlossen. Nach Auswahl des Motortyps wird der Motor gestartet und die Betriebsart-Vollastbeschleunigung mit anschließender Auslaufphase in der gleichen Art und Weise wie bereits im ersten Ausführungsbeispiel beschrieben durchgeführt, nur daß dabei vom Anfang bis zum Ende der Meßwerterfassung nur Umlaufzeiten ermittelt werden. Die Steuerung des Meßwerterfassungsprozesses reduziert sich somit auf das Starten und Stoppen dieses Prozesses.

Durch Anwendung der gleichen Berechnungsverfahren können mit den gespeicherten Umlaufzeiten die Kennwerte und Funktionsverläufe für den Gesamtmotor und den Drehzahlregler bestimmt werden. Zur Erhöhung der Reproduzierbarkeit der Ergebnisse ist es auch hier zweckmäßig, den Prüflauf zu wiederholen.

Nach einigen nur wenige Sekunden dauernden Prüfläufen steht die gleiche Anzahl von Kennwerten für eine umfassende Bewertung des technischen Zustandes des Gesamtmotors und des Drehzahlreglers zur Verfügung, wie sie im ersten Ausführungsbeispiel aufgeführt sind, Eine Lokalisierung von Fehlern innerhalb des Motors ist hier jedoch nicht möglich.

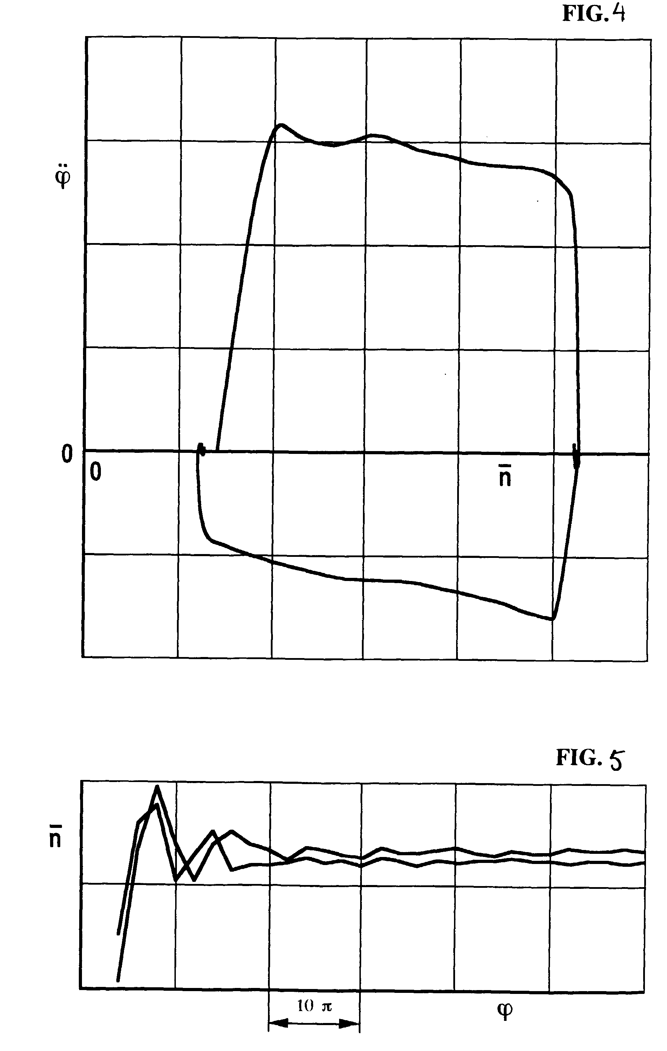

Fig. 4 zeigt einen so ermittelten Verlauf der dem dynamischen Drehmoment direkt proportionalen Winkelbeschleunigung, und Fig. 5 zeigt den Verlauf der Kurbelwellendrehzahl als Funktion des Kurbelwinkels, aus dem die beschriebenen Kennwerte für den Drehzahlregler zur Kennzeichnung des Regelverhaltens bei maximaler Drehzahl ermittelt werden.

**Patentansprüche**

1. Verfahren zur prüfstandslosen Ermittlung technischer Kennwerte von Verbrennungsmotoren und deren Einzelzylindern durch indirekte Ermittlung von Drehzahl, Drehmoment, Arbeit und Leistung mittels Analyse der rotierenden Bewegung der Kurbelwelle des durch innere und äußere Widerstandsmomente sowie durch das Trägheitsmoment aller zu beschleunigenden Massen belasteten Verbrennungsmotors, wobei ein fester Bezugswinkel im Arbeitszyklus abgeleitet wird, **dadurch gekennzeichnet**, daß
zur Ermittlung von Drehzahl, Drehmoment, Arbeit und Leistung sowie von technischen Kennwerten Umlauf- oder Teilumlaufzeiten der Kurbelwelle für bestimmte, innerhalb eines vollständigen Arbeitszyklus des Motors definierte und mit dessen Periodizität sich wiederholende Kurbelwinkelbereiche ermittelt werden, wobei Anzahl, Anordnung und Breite der Kurbelwinkelbereiche in denen Umlauf- oder Teilumlaufzeiten zu ermitteln sind, in Abhängigkeit von den zu bestimmenden Kennwerten vorgegeben werden und die Anordnung jedes Kurbelwinkelbereiches im Arbeitszyklus durch seinen Anfang in Bezug auf den festen Bezugswinkel im Arbeitszyklus festgelegt ist.

2. Verfahren nach Anspruch 1, in dem zur Ermittlung von technischen Kennwerten Teilumlaufzeiten zu erfassen sind, wobei Kurbelwinkelbereiche aus der gleichmäßigen Winkelteilung eines Bauteiles abgeleitet werden, das mit der Kurbelwelle verbundenen ist, und der Anfang jedes Kurbelwinkelbereiches im Arbeitszyklus durch eine erste Anzahl von Winkelsegmenten $x_i$, die auf den festen Bezugswinkel im Arbeitszyklus folgen, und die Breite der Kurbelwinkelbereiche, für die Teilumlaufzeiten zu bestimmen sind, durch eine zweite Anzahl von Winkelsegmenten $x_m$ vorgegeben sind.

3. Verfahren nach Anspruch 1 oder 2, in dem zur Ermittlung von technischen Kennwerten Winkelbeschleunigungen zu erfassen sind, wobei die Winkelbeschleunigung in diesen Kurbelwinkelbereichen auf der Basis der ermittelten Umlauf- oder Teilumlaufzeiten nach der Beziehung

$$\ddot{\varphi}_i = \frac{\pi * x_m^2}{x_0 * (x_{i+p} - x_i)} * \left( \frac{f^2}{z_{i+p}^2} - \frac{f^2}{z_i^2} \right)$$

bestimmt werden, worin bedeuten:

$\ddot{\varphi}_i$     Winkelbeschleunigung im i-ten Kurbelwinkelbereich,

$x_0$     Anzahl der Winkelsegmente des die Kurbelwinkelteilung tragenden Bauteiles,

$x_m$     Anzahl der Winkel segmente, über die die Umlauf- oder Teilumlaufzeit ermittelt wird,

$x_i$     Anzahl der Winkelsegmente vom festen Winkel im Arbeitszyklus bis zum Start der Zeiterfassung im i-ten Kurbelwinkelbereich,

$x_{i+p}$     Anzahl der Winkelsegmente vom festen Winkel im Arbeitszyklus bis zum Start der Zeiterfassung im i+p-ten Kurbelwinkelbereich,

$p$     ganze Zahl

$z_i$     Zählerstand des Zeittaktzählers, der der i-ten Umlauf- oder Teilumlaufzeit entspricht,

$z_{i+p}$     Zählerstand des Zeittaktzählers, der der i+p-ten Umlauf- oder Teilumlaufzeit entspricht,

$f$     Frequenz des Zeittaktes ;

dabei wird eine eindeutige Zuordnung der einzelnen Winkelbeschleunigungswerte zu den Arbeitsphasen der Einzelzylinder durch den festen Bezugswinkel im Arbeitszyklus sowie die daran anschließende Zündfolge der Einzelzylinder und in Relation dazu durch die festgelegte Reihenfolge der Kurbelwinkelbereiche, in denen Teilumlaufzeiten ermittelt oder Winkelbeschleunigungswerte bestimmt werden, hergestellt.

4.   Verfahren nach irgend- einem der vorgenannten Ansprüche, wobei die Berechnung technischer Kennwerte für den Gesamtmotor oder von Kennwerten für die Einzelzylinder einerseits in den zwischen der Erfassung von Umlauf- oder Teilumlaufzeiten liegenden Zeiträumen und damit in Echtzeit oder andererseits nach Erfassung aller Umlauf- oder Teilumlaufzeiten durchgeführt wird.

5.   Verfahren nach irgend- einem der vorgenannten Ansprüche, wobei zur Ermittlung der Kennwerte für den Gesamtmotor und für die Einzelzylinder die Betriebsarten des Motors und die Parameter zur Ermittlung der Umlauf- und Teilumlaufzeiten so gesteuert werden, daß

a) während des Anlaßvorganges bei gesperrter Kraftstoffzufuhr zur Analyse des Kompressionsverhaltens Kennwerte für die Arbeit der Einzelzylinder in der Kompressions- und/oder Expansionsphase bestimmt werden,
b) bei Leerlaufdrehzahl zur Analyse der Laufunruhe des Motors Kennwerte für die Arbeit der Einzelzylinder in der Kompressions- und/oder Expansionsphase bestimmt werden,
c) die Betriebsart Vollastbeschleunigung mit anschließender Auslaufphase durch schnelles Betätigen des Gaspedals eingestellt wird und in einem ersten Bereich, der nach einer bestimmten Erhöhung der Winkelgeschwindigkeit oder nach Zurücklegen eines bestimmten Kurbelwinkels nach der Pedalbetätigung beginnt und nach einer vorbestimmten Anzahl aufeinanderfolgender Arbeitszyklen endet, Kennwerte für die Arbeits- und Leistungsanteile der Einzelzylinder ermittelt werden und in einem unmittelbar daran anschließenden zweiten Bereich, der bis zur Nenndrehzahl reicht, Kennwerte für Drehmoment und Leistung des Motors als Funktion der Drehzahl bestimmt werden und in einem anschließenden dritten Bereich, der bis zum Einregeln der maximalen Motordrehzahl reicht, Kennwerte für den Drehzahlregler bestimmt werden und in einem daran anschließenden vierten Bereich, in dem nach Sperren der Kraftstoffzufuhr die Verzögerung des Motorlaufs, d. h. die Auslaufphase, beginnt, Kennwerte für das Verlustmoment und die Verlustleistung des Motors als Funktion der Drehzahl bestimmt werden und in einem nach Unterschreiten einer bestimmten Winkelgeschwindigkeit sich anschließenden fünften Bereich über eine vorbestimmte Anzahl aufeinanderfolgender Arbeitszyklen Kennwerte für das Verlustmoment oder die Verlustleistung der Einzelzylinder in der Kompressions- und Expansionsphase sowie unter Einbeziehung der bereits im ersten Bereich ermittelten Arbeitsanteile der Einzelzylinder zusätzliche Kennwerte für das indizierte Moment und den mechanischen Wirkungsgrad der Einzelzylinder bestimmt werden und in einem sich daran anschließenden sechsten Bereich, der bis zum Einregeln der Leerlaufdrehzahl reicht, weitere Kennwerte für den Drehzahlregler bestimmt werden.

6.   Verfahren nach irgend- einem der vorgenannten Ansprüche, wobei

a) die Anzahl der Winkelsegmente $x_m$, über die Teilumlaufzeiten ermittelt werden, einen Minimalwert nicht unterschreitet und dieser Minimalwert ausgehend vom vorhandenen Teilungsfehler der Winkelteilung des Bauteiles, von dem die Kurbelwinkelstellung abgeleitet wird, und vom zulässigen Fehler der Winkelbeschleunigung entweder mit Hilfe der Fehlerrechnung abgeschätzt oder mittels Simulationsrechnung oder experimentell bestimmt wird,

b) die Anzahl und Anordnung der Kurbelwinkelbereiche, in denen Teilumlaufzeiten zu ermitteln sind, in Abhängigkeit vom Motorentyp, z.B. im Bezug auf Arbeitsverfahren, Zylinderanzahl, Zylinderanordnung, von der verfügbaren Kurbelwinkelteilung und der Spezifik der zu bestimmenden Kennwerte innerhalb des Arbeitszyklus festgelegt werden und

c) für die vergleichende Bewertung der Einzelzylinder getrennt für jede Art von Kennwert aus den einzelnen Kennwerten, die für eine bestimmte Anzahl von Arbeitszyklen ermittelt wurden, ein mittlerer Kennwert für jeden Einzelzylinder bestimmt wird und mit den mittleren Kennwerten aller Zylinder relative Einzelzylinderkennwerte gebildet werden, wobei die Relationen der mittleren Kennwerte untereinander entweder zum Mittelwert aller Zylinder oder zum Extremwert eines Zylinders hergestellt werden.

7. Verfahren nach Anspruch 3, wobei

a) das dynamisch ermittelte Drehmoment des Gesamtmotors nach der Beziehung

$$M_{d_i} = \theta * \ddot{\varphi}_i$$

bestimmt wird, worin bedeuten:

$\theta$ — Trägheitsmoment aller zu beschleunigenden Massen,
$\ddot{\varphi}_i$ — Winkelbeschleunigung im i-ten Kurbelwinkelbereich,

und für die Bestimmung der Winkelgeschwindigkeit und der Winkelbeschleunigung die Parameter $x_m = x_0$ und $(x_{i+p} - x_i) = 2\,x_0$ oder ein ganzzahliges Vielfaches von $2\,x_0$ gewählt werden, und das i-te ermittelte dynamische Drehmoment einer gemittelten Kurbelwellendrehzahl

$$\bar{n}_i = \frac{30 * x_m}{x_0} * \left( \frac{f}{z_i} + \frac{f}{z_{i+p}} \right)$$

zugeordnet und als Funktion der Drehzahl dargestellt wird,

b) der Kennwert für das maximale Drehmoment im zweiten Bereich der Vollastbeschleunigung nach der Beziehung

$$M_{max} = \bar{M}_{d_{(max)2}} * K_M$$

bestimmt wird, worin bedeuten:

$\bar{M}_{d_{(max)2}}$ — Mittelwert einer bestimmten Anzahl dynamischer Drehmomentwerte im Bereich der Drehzahl des maximalen Drehmomentes,

$K_M$ — Korrekturfaktor, der das Verhältnis zwischen dem auf einem Prüfstand ermittelten maximalen Drehmoment und dem mittleren dynamischen Drehmoment im Bereich der Drehzahl des maximalen Drehmomentes darstellt,

c) ein Kennwert für das Verlustmoment bei der Drehzahl des maximalen Drehmomentes im vierten Bereich der Vollastbeschleunigung nach der Beziehung

$$M_{dv} = \bar{M}_{d_{(max)4}} * K_M$$

bestimmt wird, worin bedeutet:

$\overline{M}_{d_{(max)4}}$  Mittelwert einer bestimmten Anzahl dynamischer Verlustmomentwerte im Bereich der Drehzahl des maximalen Drehmomentes und

d) aus den bereits ermittelten Kennwerten zusätzliche Kennwerte für das indizierte Moment im Bereich der Drehzahl des maximalen Drehmomentes nach der Beziehung

$$M_{ind} = M_{max} + |M_{dv}|$$

sowie für den mechanischen Wirkungsgrad des Motors im Bereich der Drehzahl des maximalen Drehmomentes nach der Beziehung

$$\eta_m = \frac{M_{max}}{M_{ind}} = \frac{\overline{M}_{d_{(max)2}}}{\overline{M}_{d_{(max)2}} + \left|\overline{M}_{d_{(max)4}}\right|}$$

bestimmt werden.

8.  Verfahren nach Anspruch 3, wobei

a) die dynamisch ermittelte effektive Leistung des Gesamtmotors nach der Beziehung

$$P_{ed_i} = \theta * \ddot{\varphi}_i * \overline{\dot{\varphi}}_i$$

bestimmt wird, worin bedeuten:

$\theta$   Trägheitsmoment aller zu beschleunigenden Massen,
$\ddot{\varphi}_i$   Winkelbeschleunigung im i-ten Kurbelwinkelbereich,
$\overline{\dot{\varphi}}_i$   mittlere Winkelgeschwindigkeit im i-ten Kurbelwinkelbereich,

und nach Einsetzen der Parameter für die Ermittlung der mittleren Winkelgeschwindigkeit obige Beziehung folgende Form aufweist:

$$P_{ed_i} = \theta * \ddot{\varphi}_i * \frac{\pi * x_m}{x_0} * \left( \frac{f}{z_i} + \frac{f}{z_{i+p}} \right)$$

und für die Bestimmung der Winkelgeschwindigkeit und der Winkelbeschleunigung die Parameter $x_m = x_0$ und $(x_{i+p} - x_i) = 2 x_0$ oder ein ganzzahliges Vielfaches von $2 x_0$ gewählt werden, und die i-te ermittelte effektive Leistung einer gemittelten Kurbelwellendrehzahl

$$\overline{n}_i = \frac{30 * x_m}{x_0} * \left( \frac{f}{z_i} + \frac{f}{z_{i+p}} \right)$$

zugeordnet und als Funktion der Drehzahl dargestellt wird und
b) der Kennwert für die Nennleistung im zweiten Bereich der Vollastbeschleunigung nach der Beziehung

$$P_{e_{nenn}} = \overline{P}_{ed_{(max)2}} * K_P$$

bestimmt wird, worin bedeuten:

$P_{ed(max)2}$     Mittelwert einer bestimmten Anzahl effektiver dynamischer Leistungswerte im Bereich der Nenndrehzahl,

$K_P$     Korrekturfaktor, der das Verhältnis zwischen der auf einem Prüfstand ermittelten effektiven Nennleistung und der ermittelten effektiven dynamischen Leistungswerte im Bereich der Nenndrehzahl darstellt.

9. Verfahren nach irgend- einem der vorgenannten Ansprüche, wobei

a) zur Kennzeichnung der Funktion des Drehzahlreglers im dritten Bereich der Vollastbeschleunigung einerseits die Drehzahl $\bar{n}_{ab}$ bestimmt wird, bei der die effektive dynamische Leistung ihren Maximalwert erreicht und andererseits ab dieser Drehzahl die maximale Drehzahl $n_{max}$ und einige Umdrehungen später aus einer bestimmten Anzahl von Umdrehungen die mittlere Maximaldrehzahl $\bar{n}_{max}$ und eine mittlere Drehzahlabweichung bei Maximaldrehzahl ermittelt werden, im sechsten Bereich, am Ende der Auslaufphase, die minimale Drehzahl $n_{min}$ und einige Umdrehungen später aus einer bestimmten Anzahl von Umdrehungen die mittlere Leerlaufdrehzahl $\bar{n}_L$ und die mittlere Drehzahlabweichung bei Leerlaufdrehzahl ermittelt und die Drehzahlverläufe als Funktion der Kurbelwellenumdrehungen dargestellt werden und

b) als Kennwerte für die Funktion des Drehzahlreglers zum einen

die mittlere Maximaldrehzahl.
die mittlere Drehzahlabweichung bei Maximaldrehzahl,
die mittlere Leerlaufdrehzahl sowie
die mittlere Drehzahlabweichung bei Leerlaufdrehzahl

herangezogen werden und zum anderen die maximale Regelabweichung beim Einregeln der maximalen Motordrehzahl und der Leerlaufdrehzahl nach den Beziehungen

$$\Delta n_{RM} = n_{max} - \bar{n}_{max} \text{ und } \Delta n_{RL} = \bar{n}_L - n_{min}$$

sowie der Abregelbereich des Drehzahlreglers nach der Beziehung

$$\Delta n_{AB} = \bar{n}_{max} - \bar{n}_{ab}$$

bestimmt werden.

10. Vorrichtung zur prüfstandslosen Ermittlung technischer Kennwerte von Verbrennungsmotoren und deren Einzelzylindern durch indirekte Ermittlung von Drehzahl, Drehmoment, Arbeit und Leistung mittels Analyse der rotierenden Bewegung der Kurbelwelle des durch innere und äußere Widerstandsmomente sowie durch das Trägheitsmoment aller zu beschleunigenden Massen belasteten Verbrennungsmotors, die folgende Merkmale aufweist:

- einen Kurbelwinkelsensor zur Erfassung des Kurbelwinkels
- einen zweiten Sensor zur Erfassung einer festen Kurbelwinkelmarke
- einen dritten Sensor zur Erzeugung eines Arbeitszyklussignales
- eine Zählerschaltung mit einem Taktgenerator verbunden zur Erfassung von Umlauf- und Teilumlaufzeiten der Kurbelwelle
- einen Mikrorechner zur Ermittlung von Drehzahl und Drehmoment aus den zugeführten Signalen und
- eine Anzeigevorrichtung zur Darstellung der ermittelten Werte

dadurch gekennzeichnet, daß

a) eine weitere Zählerschaltung vorhanden ist zur Zählung der Signale vom Kurbelwinkelsensor,
b) im Mikrorechner ein Speicher vorhanden ist zur Speicherung der Anzahl, Anordnung und Breite der Kurbelwinkelbereiche, in denen Umlauf- oder Teilumlaufzeiten zu ermitteln sind, wobei Anzahl, Anordnung und Breite der Kurbelwinkelbereiche in denen Umlauf- oder Teilumlaufzeiten zu ermitteln sind, in Abhängigkeit von den zu bestimmenden Kennwerten vorgegeben werden, und daß

c) der Mikrorechnet dazu ausgebildet ist, unter Anwendung der gespeicherten Werte und dem zugeführten Zählerstand von der weiteren Zählerschaltung die erste Zählerschaltung zu starten, zu stoppen und den der jeweiligen Umlauf- oder Teilumlaufzeit entsprechenden Zählerstand auszulesen und unter Hinzunahme weiterer gespeicherter Werte die in der jeweiligen Betriebsart festgelegten Kennwerte zu ermitteln.

## Claims

1. A method for the off-bench determination of technical characteristics of internal combustion engines and individual cylinders thereof by indirectly determining speed of rotation, torque, power and output by means of analysis of the rotary movement of the crankshaft of the internal combustion engine which is loaded by internal and external resistance moments and by the moment of inertia of all masses to be accelerated, a fixed reference angle being derived in the working cycle, characterised in that to determine speed of rotation, torque, power and output and technical characteristics, revolution or part-revolution times of the crankshaft are determined for given crank angle ranges which are defined within a complete working cycle of the engine and which are repeated with the periodicity thereof, wherein the number, arrangement and width of the crank angle ranges in which revolution or part-revolution times are to be determined are predetermined in dependence on the characteristics to be ascertained and the arrangement of each crank angle range in the working cycle is fixed by its beginning in relation to the fixed reference angle in the working cycle.

2. A method according to claim 1 in which to determine technical characteristics part-revolution times are to be detected, wherein crank angle ranges are derived from the uniform angular division of a component which is connected to the crankshaft and the beginning of each crank angle range in the working cycle is predetermined by a first number of angle segments $x_i$ which follow the fixed reference angle in the working cycle and the width of the crank angle ranges for which part-revolution times are to be specified is predetermined by a second number of angle segments $x_m$.

3. A method according to claim 1 or claim 2 in which angular accelerations are to be detected to determine technical characteristics, wherein the angular acceleration is specified in said crank angle ranges on the basis of the revolution or part-revolution times determined, in accordance with the relationship:

$$\ddot{\varphi}_i = \frac{\pi * x_m^2}{x_0 * (x_{i+p} - x_i)} * \left( \frac{f^2}{z_{i+p}^2} - \frac{f^2}{z_i^2} \right)$$

wherein:

$\ddot{\varphi}_i$ denotes the angular acceleration in the i-th crank angle range,

$x_0$ denotes the number of angle segments of the component carrying the crank angle division,

$x_m$ denotes the number of angle segments over which the revolution or part-revolution time is determined,

$x_i$ denotes the number of angle segments-from the fixed angle in the working cycle to the start of time detection in the i-th crank angle range,

$x_{i+p}$ denotes the number of angle segments from the fixed angle in the working cycle to the start of time detection in the i+p-th crank angle range,

p denotes an integer,

$z_i$ denotes the counter condition of the time clock counter which corresponds to the i-th revolution or part-revolution time,

$z_{i+p}$ denotes the counter condition of the time clock counter which corresponds to the i+p-th revolution or part-revolution time, and

f denotes the frequency of the time clock;

in that case a definite association of the individual angular acceleration values with the working phases of the individual cylinders is made by the fixed reference angle in the working cycle and the subsequent firing order of the individual cylinders and in relation thereto by the established sequence of the crank angle ranges in which part-revolution times are ascertained or angular acceleration values are specified.

4. A method according to any one of the preceding claims wherein the calculation of technical characteristics for the entire engine or characteristics for the individual cylinders is effected on the one hand in the periods of time between the detection of revolution or part-revolution times and thus in real time or on the other hand after detection of all revolution or part-revolution times.

5. A method according to any one of the preceding claims wherein to determine the characteristics for the entire engine and for the individual cylinders the modes of operation of the engine and the parameters for determining the revolution and part-revolution times are so controlled that:

a) during the start-up phase with the supply of fuel shut off for analysis of the compression parameters characteristics are specified for the power of the individual cylinders in the compression and/or expansion phase,

b) at idle speed for analysis of uneven running of the engine characteristics are specified for the power of the individual cylinders in the compression and/or expansion phase, and

c) the mode of operation full load acceleration with subsequent coasting phase is set by rapid actuation of the accelerator pedal and in a first range which begins after a given increase in the angular speed or after a given crank angle has been covered after actuation of the pedal and which terminates after a predetermined number of successive working cycles, characteristics in respect of the power and output components of the individual cylinders are determined and in an immediately subsequent second range which extends as far as the rated speed of rotation characteristics in respect of torque and output of the engine are specified as a function of the speed of rotation and in a subsequent third range which extends as far as setting of the maximum engine speed of rotation characteristics are specified for the rotary speed regulator and in a subsequent fourth range in which after the supply of fuel is shut off deceleration of engine operation, that is to say the coasting phase, begins, characteristics in respect of the torque loss and the output loss of the engine are specified as a function of the speed of rotation and in a fifth region which follows after the angular speed falls below a given value, over a predetermined number of successive working cycles, characteristics are determined in respect of the torque loss or the output loss of the individual cylinders in the compression and expansion phase and with the incorporation of the power components of the individual cylinders, which have already been determined in the first range, additional characteristics are specified in respect of the indicated torque and the degree of mechanical efficiency of the individual cylinders and in a subsequent sixth range which extends as far as setting of the idle speed of rotation, further characteristics are specified in respect of the rotary speed regulator.

6. A method according to any one of the preceding claims wherein:

a) the number of angle segments $x_m$ over which part-revolution times are determined does not fall below a minimum value and said minimum value, on the basis of the existing division error in respect of the angle division of the component from which the crank angle position is derived and the admissible error in respect of angular acceleration, is either estimated by means of error calculation or it is ascertained by means of simulation calculation or experimentally,

b) the number and arrangement of the crank angle ranges in which part-revolution times are to be determined are established in dependence on the engine type, for example in relation to the working process, the number of cylinders and the cylinder arrangement, the available crank angle division and the specification of the characteristics to be ascertained, within the working cycle, and

c) a mean characteristic for each individual cylinder is ascertained for the comparative evaluation of the individual cylinders separately for each kind of characteristic from the individual characteristics which were determined for a given number of working cycles and relative individual cylinder characteristics are formed with the mean characteristics of all cylinders, wherein the relationships of the mean characteristics with each other are effected either with respect to the mean value of all cylinders or with respect to the extreme value of a cylinder.

7. A method according to claim 3 wherein:

a) the dynamically determined torque of the entire engine is ascertained in accordance with the relationship

$$M_{d_i} = \theta * \ddot{\varphi}_i \, ,$$

wherein:

$\theta$ denotes the moment of inertia of all masses to be accelerated,
$\ddot{\varphi}_i$ denotes the angular acceleration in the i-th crank angle range,

and for ascertaining the angular speed and the angular acceleration the parameters $x_m = x_0$ and $(x_{i+p} - x_i) = 2 x_0$ or an integral multiple of $2x_0$ are selected and the i-th dynamic torque determined is associated with an averaged crankshaft rotary speed

$$\overline{n}_i = \frac{30 * x_m}{x_0} * \left( \frac{f}{z_i} + \frac{f}{z_{i+p}} \right)$$

and is represented as a function of the speed of rotation,
b) the characteristic in respect of the maximum torque is ascertained in the second range of full load acceleration in accordance with the relationship:

$$M_{max} = \overline{M}_{d_{(max)2}} * K_M$$

wherein:

$\overline{M}_{d_{(max)2}}$ denotes the mean value of a given number of dynamic torque values in the range of the speed of rotation of maximum torque, and
$K_m$ denotes a correction factor which represents the relationship between the maximum torque determined on a bench and the mean dynamic torque in the range of the speed of rotation of maximum torque,

c) a characteristic in respect of the torque loss at the speed of rotation of maximum torque is ascertained in the fourth range of full load acceleration in accordance with the relationship:

$$M_{dv} = \overline{M}_{d_{(max)4}} * K_M$$

wherein:
$\overline{M}_{d_{(max)4}}$ denotes the mean value of a given number of dynamic torque loss values in the range of the speed of rotation of maximum torque, and
d) taking the characteristics which have already been determined additional characteristics are ascertained for the indicated torque in the range of the speed of rotation of maximum torque in accordance with the relationship:

$$M_{ind} = M_{max} + |M_{dv}|$$

and for the mechanical efficiency of the engine in the range of the speed of rotation of maximum torque in accordance with the following relationship:

$$\eta_m = \frac{M_{max}}{M_{ind}} = \frac{\overline{M}_{d_{(max)2}}}{\overline{M}_{d_{(max)2}} + \left| \overline{M}_{d_{(max)4}} \right|}$$

8. A method according to claim 3 wherein:

a) the dynamically determined effective output of the entire engine is ascertained in accordance with the relationship:

$$P_{ed_i} = \theta * \ddot{\varphi}_i * \overline{\dot{\varphi}}_i$$

wherein:

$\theta$ denotes the moment of inertia of all masses to be accelerated,

$\ddot{\varphi}_i$ denotes angular acceleration in the i-th crank angle range, and

$\overline{\dot{\varphi}}_i$ denotes the mean angular speed in the i-th crank angle range,

and after insertion of the parameters for determining the mean angular speed the above relationship is of the following form:

$$P_{ed_i} = \theta * \ddot{\varphi}_i * \frac{\pi * x_m}{x_0} * \left( \frac{f}{z_i} + \frac{f}{z_{i+p}} \right)$$

and for determining the angular speed and the angular acceleration the parameters $x_m = x_0$ and $(x_{i+p} - x_i) = 2x_0$ or an integral multiple of $2x_0$ are selected, and the i-th effective output determined is associated with an averaged crankshaft speed:

$$\overline{n}_i = \frac{30 * x_m}{x_0} * \left( \frac{f}{z_i} + \frac{f}{z_{i+p}} \right)$$

and is represented as a function of the speed of rotation, and
b) the characteristic in respect of the rated output is ascertained in the second range of full load acceleration in accordance with the relationship:

$$P_{e_{nenn}} = \overline{P}_{ed_{(max)2}} * K_P$$

wherein:

$\overline{P}_{ed(max)2}$ denotes the mean value of a given number of effective dynamic output values in the range of the rated speed of rotation, and

$K_p$ denotes a correction factor which represents the relationship between the effective rated output determined on a bench and the determined effective dynamic output values in the range of the rated speed of rotation.

9. A method according to any one of the preceding claims wherein:

a) to characterise the function of the rotary speed regulator in the third range of full load acceleration on the one hand the rotary speed $\overline{n}_{ab}$ is ascertained, at which the effective dynamic output reaches its maximum value and on the other hand from said speed of rotation the maximum speed of rotation $n_{max}$ and some revolutions later, from a given number of revolutions, the mean maximum speed of rotation $\overline{n}_{max}$ and a mean rotary speed deviation at the maximum speed of rotation are determined, in the sixth range, at the end of the coasting phase, the minimum speed of rotation $n_{min}$ and some revolutions later, from a given number of revolutions, the mean idle speed of rotation $\overline{n}_L$ and the mean rotary speed deviation at the idle speed of rotation are determined and the variations in speed of rotation are represented as a function of the crankshaft revolutions, and

b) the mean maximum speed of rotation,

the mean rotary speed deviation at the maximum speed of rotation,
the mean idle speed of rotation,
the mean rotary speed deviation at the idle speed of rotation

are adopted as characteristics in respect of the function of the rotary speed regulator and on the other hand the maximum regulating deviation when setting the maximum engine speed of rotation and the idle speed of rotation is ascertained in accordance with the relationships:

$$\Delta n_{RM} = n_{max} - \bar{n}_{max} \text{ and } \Delta n_{RL} = \bar{n}_{L} - n_{min}$$

and the down-regulating range of the rotary speed regulator is ascertained in accordance with the relationship:

$$\Delta n_{AB} = \bar{n}_{max} - \bar{n}_{ab}$$

10. Apparatus for the off-bench determining of technical characteristics of internal combustion engines and individual cylinders thereof by indirectly determining speed of rotation, torque, power and output by means of analysis of the rotary movement of the crankshaft of the internal combustion engine which is loaded by internal and external resistance moments and by the moment of inertia of all masses to be accelerated, which has the following features:

- a crank angle sensor for detecting the crank angle,
- a second sensor for detecting a fixed crank angle mark,
- a third sensor for producing a working cycle signal,
- a counter circuit connected to a clock generator for detecting revolution and part-revolution times of the crankshaft,
- a microcomputer for determining speed of rotation and torque from the supplied signals, and
- a display means for representing the values determined,

characterised in that

a) there is a further counter circuit for counting the signals from the crank angle sensor,
b) provided in the microcomputer is a storage means for storage of the number, arrangement and width of the crank angle ranges in which revolution or part-revolution times are to be determined, wherein the number, arrangement and width of the crank angle ranges in which revolution or part-revolution times are to be determined are predetermined in dependence on the characteristics to be ascertained, and that
c) the microcomputer is designed, using the stored values and the supplied counter condition from the further counter circuit to start the first counter circuit, to stop it, and to read out the counter condition corresponding to the respective revolution or part-revolution time and with the inclusion of further stored values to determine the characteristics which are established in the respective mode of operation.

**Revendications**

1. Procédé de mesure hors banc de valeurs caractéristiques de moteurs à combustion et de chacun de leurs cylindres par détermination indirecte du nombre de tours, du couple, du travail et de la puissance par analyse du mouvement rotatif du vilebrequin du moteur à combustion interne chargé par des couples de résistance internes et externes ainsi que par le moment d'inertie de toutes les masses à accélérer, un angle de référence bien déterminé étant dérivé dans le cycle de travail,
**caractérisé par le fait**
que, pour la détermination du nombre de tours, du couple, du travail et de la puissance ainsi que de valeurs caractéristiques techniques, on détermine des temps de révolution ou temps de révolution partiels du vilebrequin pour des zones d'angle de vilebrequin déterminées, bien définies dans un cycle de travail complet du moteur et se répétant avec la périodicité de ce cycle, le nombre, la disposition et la largeur des zones d'angle de vilebrequin dans lesquelles des temps de révolution ou temps de révolution partiels doivent être déterminés étant donnés en fonction des valeurs caractéristiques à déterminer, et la disposition de chacune des zones d'angle de vilebrequin dans le cycle de travail étant déterminée par son début par rapport à l'angle fixe de référence dans le cycle de travail.

2. Procédé selon la revendication 1, dans le cas duquel des temps de révolution partiels doivent être enregistrés pour la détermination de valeurs caractéristiques techniques, des zones d'angle de vilebrequin étant déduites de la subdivision régulière de l'angle d'une pièce qui est reliée au vilebrequin, et le début de chacune des zones d'angle de vilebrequin dans le cycle de travail étant donné par un premier nombre de segments d'angle $x_i$ qui succèdent à l'angle fixe de référence dans le cycle de travail, et la largeur des zones d'angle de vilebrequin, pour lesquelles des temps de révolution partiels doivent être déterminés, étant donnée par un deuxième nombre de segments d'angle $x_m$.

3. Procédé selon la revendication 1 ou 2, dans le cas duquel des accélérations angulaires doivent être enregistrées pour la détermination de valeurs caractéristiques techniques, l'accélération angulaire dans ces zones d'angle de vilebrequin étant déterminée sur la base des temps de révolution ou temps de révolution partiels déterminés suivant la relation

$$\ddot{\varphi}_i = \frac{\pi * x_m^2}{x_0 * \left(x_{i+p} - x_i\right)} * \left(\frac{f^2}{z_{i+p}^2} - \frac{f^2}{z_i^2}\right)$$

où signifient:

$\ddot{\varphi}_i$      accélération angulaire dans la i$^{ème}$ zone d'angle de vilebrequin,

$x_0$      nombre des segments d'angle de la pièce portant la subdivision de l'angle de vilebrequin,

$x_m$      nombre des segments d'angle par lequel le temps de révolution ou temps de révolution partiel est déterminé,

$x_i$      nombre des segments d'angle de l'angle fixe dans le cycle de travail jusqu'au début de l'enregistrement du temps dans la i$^{ème}$ zone d'angle de vilebrequin,

$x_{i+p}$      nombre des segments d'angle de l'angle fixe dans le cycle de travail jusqu'au début de l'enregistrement du temps dans la i+p$^{ème}$ zone d'angle de vilebrequin,

$p$      nombre entier,

$z_i$      indication du compteur de l'horloge de temps, qui correspond au i$^{ème}$ temps de révolution ou temps de révolution partiel,

$x_{i+p}$      indication du compteur de l'horloge de temps, qui correspond au i+p$^{ème}$ temps de révolution ou temps de révolution partiel,

$f$      fréquence de l'horloge de temps;

à ce propos est réalisée une association univoque de chacune des valeurs d'accélération angulaire aux phases de travail de chacun des cylindres par l'angle fixe de référence dans le cycle de travail ainsi que par l'ordre d'allumage suivant de chacun des cylindres et, en relation avec cela, par la succession bien déterminée des zones d'angle de vilebrequin dans lesquelles des temps de révolution partiels ou des valeurs d'accélération angulaire sont déterminés.

4. Procédé selon l'une quelconque des revendications précédentes, la calculation de valeurs caractéristiques techniques pour l'ensemble du moteur ou de valeurs caractéristiques pour chacun des cylindres étant effectuée d'un côté dans des intervalles de temps qui se trouvent entre l'enregistrement de temps de révolution ou temps de révolution partiels et ainsi en temps réel ou, de l'autre côté, après l'enregistrement de tous les temps de révolution ou temps de révolution partiels.

**5.** Procédé selon l'une quelconque des revendications précédentes, les modes de fonctionnement du moteur ainsi que les paramètres pour la détermination des temps de révolution et temps de révolution partiels étant commandés - pour la détermination des valeurs caractéristiques pour l'intégralité du moteur et pour chacun des cylindres - de telle façon

a) que, pour l'analyse du comportement de compression, des valeurs caractéristiques pour le travail de chacun des cylindres dans la phase de compression et/ou de détente sont déterminées durant le processus de démarrage quand l'amenée de carburant est fermée,

b) que, pour l'analyse de l'instabilité de marche du moteur, des valeurs caractéristiques pour le travail de chacun des cylindres dans la phase de compression et/ou de détente sont déterminées au nombre de tours au ralenti.

c) que le mode accélération à pleine charge avec, par la suite, une phase où le moteur marche sur son erre est réglé par un actionnement rapide de l'accélérateur et que, dans un premier domaine qui commence après une certaine augmentation de la vitesse angulaire ou après avoir parcouru un certain angle de vilebrequin après l'actionnement de la pédale et qui se termine après un nombre prédéterminé de cycles de travail succéssifs, des valeurs caractéristiques pour les parts de travail et de puissance des cylindres individuels sont déterminées et que, dans un second domaine qui suit immédiatement après et qui s'étend jusqu'à la vitesse de régime nominale, des valeurs caractéristiques pour le couple et la puissance du moteur sont déterminées en tant que fonction du nombre de tours, et que, dans un troisième domaine qui suit et s'étend jusqu'au réglage du nombre de tours maximal du moteur, des valeurs caractéristiques pour le régulateur de vitesse sont déterminées, et que, dans un quatrième domaine qui suit et où commence - après le blocage de l'amenée de carburant - le ralentissement de la marche du moteur, c'est-à-dire la phase dans laquelle il marche sur son erre, des valeurs caractéristiques pour la perte en couple et les pertes de puissance du moteur sont déterminées en tant que fonction du nombre de tours, et que, dans un cinquième domaine, après avoir passé en dessous d'une certaine vitesse angulaire, des valeurs caractéristiques pour la perte en couple et les pertes de puissance des cylindres individuels dans la phase de compression et de détente sont déterminées par un nombre prédéterminé de cycles de travail successifs, et en prenant en considération des parts de travail des cylindres individuels, qui ont été déjà déterminées dans le premier domaine, des valeurs caractéristiques supplémentaires pour le moment induit et le rendement mécanique des cylindres individuels sont déterminées, et que, dans un sixième domaine qui suit et qui s'étend jusqu'au réglage du nombre de tours au ralenti, d'autres valeurs caractéristiques pour le régulateur de vitesse sont déterminées.

**6.** Procédé selon l'une quelconque des revendications précédentes,

a) le nombre des segments d'angle $x_m$ par lesquels des temps de révolution partiels sont déterminés, ne passant pas en dessous d'une valeur minimale, et ce valeur minimale étant - à partir de l'erreur existante de division de la subdivision de l'angle de la pièce de laquelle la position de l'angle de vilebrequin est déduite, ainsi que de l'erreur admissible de l'accélération angulaire - ou évaluée par le biais du calcul d'erreur ou déterminée par le biais du calcul de simulation ou de façon expérimentale,

b) le nombre ainsi que la disposition des zones d'angle de vilebrequin dans lesquelles des temps de révolution partiels doivent être déterminés, étant fixés en fonction du type du moteur, par exemple par rapport au mode de travail, au nombre de cylindres et à la disposition des cylindres, de la subdivision disponible de l'angle de vilebrequin et du spécifique des valeurs caractéristiques à déterminer dans un cycle de travail et

c) pour l'évaluation comparative de chacun des cylindres séparément pour chaque type de valeur caractéristique, une valeur caractéristique moyenne pour chacun des cylindres individuels étant déterminée à partir des valeurs caractéristiques individuelles qui ont été déterminées pour un nombre bien déterminé de cycles de travail, et des valeurs caractéristiques relatives des cylindres individuels étant formées avec les valeurs caractéristiques moyennes de tous les cylindres, les rapports des valeurs caractéristiques moyennes entre elles soit à la valeur moyenne de tous les cylindres soit à la valeur extrême d'un cylindre étant réalisés.

**7.** Procédé selon la revendication 3,

a) le couple déterminé dynamiquement de l'ensemble du moteur étant déterminé suivant la relation

$$M_{d_i} = \theta * \ddot{\varphi}_i$$

où signifient:

$\theta$ moment d'inertie de toutes les masses à accélérer

$\ddot{\varphi}_i$ accélération angulaire dans la $i^{ème}$ zone d'angle de vilebrequin

et, pour la détermination de la vitesse angulaire ainsi que de l'accélération angulaire, étant choisis les paramètres $x_m = x_0$ et $x_{i+p} - x_i = 2x_0$ ou un multiple entier de $2x_0$, et le $i^{ème}$ couple dynamique déterminé étant associé à un nombre de tours moyen du vilebrequin

$$\overline{n_i} = \frac{30 * x_m}{x_0} * \left( \frac{f}{z_i} + \frac{f}{z_{i+p}} \right)$$

et étant représenté en tant que fonction du nombre de tours,

b) la valeur caractéristique pour le couple maximal étant déterminée dans le deuxième domaine de l'accélération à pleine charge suivant la relation

$$M_{max} = \overline{M}_{d_{(max)^2}} * K_M$$

où signifient:

$\overline{M}_{d_{(max)^2}}$ valeur moyenne d'un certain nombre de valeurs de couples dynamiques dans le domaine du nombre de tours du couple maximal,

$K_M$ coefficient de correction qui représente le rapport entre le couple maximal déterminé sur un banc d'essai et le couple dynamique moyen dans le domaine du nombre de tours du couple maximal,

c) une valeur caractéristique pour la perte en couple au nombre de tours du couple maximal étant déterminée dans le quatrième domaine de l'accélération à pleine charge suivant la relation

$$M_{dv} = \overline{M}_{d_{(max)^4}} * K_M$$

où signifient:

$\overline{M}_{d_{(max)^4}}$ valeur moyenne d'un certain nombre de valeurs de perte en couple dynamique dans le domaine du nombre de tours du couple maximal et

d) à partir des valeurs caractéristiques déjà déterminées, des valeurs caractéristiques supplémentaires pour le moment induit étant déterminées dans le domaine du nombre de tours du couple maximal suivant la relation

$$M_{ind} = M_{max} + |M_{dv}|$$

et des valeurs supplémentaires pour le rendement mécanique du moteur étant déterminées dans le domaine du nombre de tours du couple maximal suivant la relation

$$\eta_m = \frac{M_{max}}{M_{ind}} = \frac{\overline{M}_{d_{(max)^2}}}{\overline{M}_{d_{(max)^2}} + \left| \overline{M}_{d_{(max)^4}} \right|}$$

8. Procédé selon la revendication 3,

a) la puissance effective déterminée dynamiquement de l'ensemble du moteur étant déterminée suivant la relation

$$P_{ed_i} = \theta * \ddot{\varphi}_i * \overline{\dot{\varphi}_i}$$

où signifient

$\theta$      moment d'inertie de toutes les masses à accélérer

$\ddot{\varphi}_i$      accélération angulaire dans la i$^{\text{ème}}$ zone d'angle de vilebrequin

$\bar{\varphi}_i$      vitesse angulaire moyenne dans la i$^{\text{ème}}$ zone d'angle de vilebrequin

et, après avoir mis les paramètres pour la détermination de la vitesse angulaire moyenne, la relation ci-dessus présentant la forme suivante:

$$P_{ed} = \theta * \ddot{\varphi}_i * \frac{\pi * x_m}{x_0} * \left( \frac{f}{z_i} + \frac{f}{z_{i+p}} \right)$$

et, pour la détermination de la vitesse angulaire ainsi que de l'accélération angulaire, étant choisis les paramètres $x_m = x_0$ et $X_{i+p} - x_i = 2x_0$ ou un multiple entier de $2x_0$, et la i$^{\text{ème}}$ puissance effective déterminée étant associée à un nombre de tours moyen du vilebrequin

$$\bar{n}_i = \frac{30 * x_m}{x_0} * \left( \frac{f}{z_i} + \frac{f}{z_{i+p}} \right)$$

et étant représentée en tant que fonction du nombre de tours, et

b) la valeur caractéristique pour la puissance nominale étant déterminée dans le deuxième domaine de l'accélération à pleine charge suivant la relation

$$P_{e_{nenn}} = \bar{P}_{ed_{(max)^2}} * K_P$$

où signifient:

$\bar{P}_{ed_{(max)^2}}$      valeur moyenne d'un certain nombre de valeurs de puissance effective dynamique dans le domaine de la vitesse de régime nominale

$K_P$      coefficient de correction qui représente le rapport entre la puissance nominale effective déterminée sur un banc d'essai et les valeurs de puissance effective dynamique dans le domaine de la vitesse de régime nominale.

**9.**    Procédé selon l'une quelconque des revendications précédentes, où

a) pour la caractérisation de la fonction du régulateur de vitesse, on détermine dans le troisième domaine de l'accélération à pleine charge d'un côté le nombre de tours $\bar{n}_{ab}$ auquel la puissance effective dynamique atteint sa valeur maximale et, de l'autre côté, à partir de ce nombre de tours, le nombre de tours maximal $n_{max}$ et, quelques tours plus tard, d'un certain nombre de tours, le nombre de tours maximal moyen $\bar{n}_{max}$ ainsi qu'un écart moyen de nombre de tours au nombre de tours maximal, et dans le sixième domaine, à la fin de la phase où le moteur marche sur son erre, on détermine le nombre de tours minimal $n_{min}$ et, quelques tours plus tard, d'un certain nombre de tours, le nombre de tours moyen au ralenti $\bar{n}_L$ et l'écart moyen de nombre de tours au nombre de tours au ralenti, et les allures du nombre de tours sont représentées en tant que fonction des révolutions du vilebrequin et

b) on utilise en tant que valeurs caractéristiques pour la fonction du régulateur de vitesse d'un côté

le nombre de tours maximal moyen,
l'écart moyen de nombre de tours au nombre de tours maximal,
le nombre de tours moyen au ralenti ainsi que
l'écart moyen de nombre de tours au nombre de tours au ralenti

et, de l'autre côté, l'écart maximal de réglage lors du réglage du nombre de tours maximal du moteur et du nombre de tours au ralenti sont déterminés suivant les relations

$$\Delta n_{RM} = n_{max} - \bar{n}_{max} \text{ et } \Delta n_{RL} = \bar{n}_L - \bar{n}_{min}$$

et le domaine de réglage vers le bas du régulateur de vitesse est déterminé suivant la relation

$$\Delta n_{AB} = \bar{n}_{max} - \bar{n}_{ab}.$$

10. Dispositif de mesure hors banc de valeurs caractéristiques de moteurs à combustion et chacun de leurs cylindres par détermination indirecte du nombre de tours, du couple, du travail et de la puissance par analyse du mouvement rotatif du vilebrequin du moteur à combustion interne chargé par des couples de résistance internes et externes ainsi que par le moment d'inertie de toutes les masses à accélérer, qui présente les caractéristiques suivantes:

- un détecteur d'angle de vilebrequin destiné à détecter l'angle de vilebrequin
- un deuxième détecteur destiné à détecter une marque fixe d'angle de vilebrequin
- un troisième détecteur destiné à générer un signal de cycle de travail
- un montage compteur relié à un horloge et destiné à enregistrer des temps de révolution et des temps de révolution partiels du vilebrequin
- un micro-ordinateur destiné à déterminer le nombre de tours ainsi que le couple à partir des signaux fournis et
- un dispositif d'affichage destiné à représenter les valeurs déterminées

  caractérisé par le fait

  a) qu'un autre montage compteur est présent qui sert à compter les signaux fournis de la part du détecteur d'angle de vilebrequin
  b) que le micro-ordinateur présente une mémoire servant à mémoriser le nombre, la disposition ainsi que la largeur des zones d'angle de vilebrequin dans lesquelles des temps de révolution ou temps de révolution partiels doivent être déterminés, le nombre, la disposition et la largeur des zones d'angle de vilebrequin dans lesquelles des temps de révolution ou temps de révolution partiels doivent être déterminés, étant donné en fonction des valeurs caractéristiques à déterminer, et
  c) que le micro-ordinateur est conçu de manière à ce qu'il puisse - en appliquant les valeurs mémorisées et l'indication du compteur fournie de l'autre montage compteur - démarrer et stopper le premier montage compteur et lire l'indication du compteur, qui correspond au temps de révolution ou temps de révolution partiels respectif et - en ajoutant d'autres valeurs mémorisées - déterminer les valeurs caractéristiques fixées au mode de fonctionnement respectif.

FIG 1

**FIG. 2**

**FIG. 3**

FIG. 4

FIG. 5

10 π